# EUROPÄISCHE PATENTSCHRIFT

(11) **EP 1 539 887 B1**
(45) Veröffentlichungstag und Bekanntmachung des Hinweises auf die Patenterteilung: **25.02.2015**
(21) Anmeldenummer: 03757783.0
(22) Anmeldetag: 04.09.2003
(51) Int. Cl.: C09C 1/00, C09C 3/12, C09C 3/10, C09C 1/64

(54) **MIT LCST- UND/ODER UCST-POLYMEREN OBERFLÄCHENMODIFIZIERTE EFFEKTPIGMENTE**
EFFECT PIGMENTS THAT ARE SURFACE-MODIFIED BY MEANS OF LCST AND/OR UCST POLYMERS
PIGMENTS A EFFET MODIFIES EN SURFACE A L'AIDE DE POLYMERES LCST ET/OU UCST

(30) Priorität: 18.09.2002 DE 10243438
(43) Veröffentlichungstag der Anmeldung: 15.06.2005
(73) Patentinhaber: Merck Patent GmbH, 64293 Darmstadt (DE)
(72) Erfinder: HUBER, Adalbert, 64625 Bensheim (DE); ENTENMANN, Marc, 70734 Fellbach (DE); SCHAUER, Thadeus, 75382 Althengstett (DE)
(86) Internationale Anmeldenummer: PCT/EP2003/009801
(87) Internationale Veröffentlichungsnummer: WO 2004/029160

(56) Entgegenhaltungen:
- WO-A-01/60926
- WO-A-01/92359
- WO-A-03/014229

## Beschreibung

Die vorliegende Erfindung betrifft oberflächenmodifizierte Periglanzpigmente, auf Basis plättchenförmiger Substrate, die sich dadurch auszeichnen, dass sie mit ein oder mehreren Schichten aus immobilisierten LCST- und/oder UCST-Polymeren umhüllt sind.

Die immer größer werdende Einsetzbarkeit plättchenförmiger Effektpigmente auf Basis plättchenförmiger Substrate in unterschiedlichen technischen Bereichen erfordert zunehmend die Entwicklung oberflächenmodifizierter Substrate um letztlich die Verträglichkeit der Pigmente mit weiteren Komponenten innerhalb technischer Zusammensetzungen zu gewährleisten.

Ein grundsätzliches Problem ist dabei die Neigung von plättchenförmigen Effektpigmenten zur Bildung von Agglomeraten, in denen die Pigmente stapelförmig aufeinander liegen und auf Grund von starker Adhäsion nur schwer wieder zu separieren sind. Dies ist um so schwerwiegender als bei der Einarbeitung von plättchenförmigen Effektpigmenten in Anwendungsmedien wegen der leichten Zerbrechlichkeit der dünnen Plättchen keine hohen Scherkräfte ausgeübt werden dürfen.

Strukturbildungen bzw. Flokkulation, Agglomeration und Aggregation sind insbesondere unerwünschte Prozesse im Bereich von Lackierungen von Oberflächen.

So wurden unter anderem zahlreiche Methoden entwickelt um das Problem der Einarbeitung von plättchenförmigen Perlglanzpigmenten, insbesondere in thermoplastischen Kunststoffen zu lösen (DE-OS 26 03 211, DE-OS 32 21 044, DE-OS 36 27 329).

Weiterhin sind Beschichtungen mit Polysiloxanen zur Verbesserung der Witterungsbeständigkeit (DE 33 34 598) bekannt, sowie die Behandlung mit Kupplungsreagenzien wie Organotitanaten zur verbesserten Dispergierbarkeit in kosmetischen Zubereitungen (EP 0 306 056), Organosilanen zur erhöhten "water resistance" und mit Silanen zur Erhöhung des Leafing-Verhaltens (EP 0 634 459 A2).

Die aus dem Stand der Technik bekannten oberflächenmodifizierten Perlglanzpigmente besitzen häufig den Nachteil, dass ihre Orientierung in Anwendungsmedien nicht optimal ist, das heißt, dass eine Verbesserung der parallelen Ausrichtung der Pigment zur Filmschicht wünschenswert wäre um die Glanzeigenschaften zu verbessern. Aus der WO 03/014229 A1, einem Stand der Technik nach A 54(3) EPÜ, sind oberflächenmodifizierte anorganische Substrate bekannt.

Aufgabe der vorliegenden Erfindung ist es weitere und verbesserte Verfahren zur Oberflächenmodifikation von Effektpigmenten auf Basis plättchenförmiger Pigmente zu entwickeln. Ziel ist es weiterhin die parallele Ausrichtung der Pigmente in der Filmschicht zu optimieren um die optischen Eigenschaften, insbesondere den Glanz, zu verbessern. Insbesondere sollten die Effektpigmente kompatibel für die verschiedensten technischen Formulierungen sein ohne dabei die typischen Eigenschaften der Effektpigmente einzubüßen.

In der WO 01/60926 wird die Beschichtung von Plättchen mit LCST-Polymeren beschrieben, wodurch die Pigmente in flüssigen Medien, wie z. B. Lacken, stabilisiert werden und die Beschichtung gleichzeitig einen Schutz gegen mechanische Beschädigung bei Scherbelastungen bietet.

Überraschenderweise wurde nun gefunden, dass insbesondere Lackschichten, die Effektpigmente auf Basis plättchenförmiger Partikel, die mit ein oder mehreren LCST- und/oder UCST-Polymeren beschichtet sind, enthalten, eine stark verbesserte Appearance aufweisen.

Gegenstand der Erfindung sind daher oberflächenmodifizierte Perlglanzpigmente auf Basis plättchenförmiger Substrate, die mit ein oder mehreren Schichten aus immobilisierten LCST- und/oder UCST-Polymeren umhüllt sind.

Durch die Nachbeschichtung der Perlglanzpigmente mit LCST- und/oder UCST-Polymeren werden die Probleme der Flokkulation, Agglomeration und Aggregation, insbesondere in Lacken, wie Autolacken, Industrielacken und Pulverlacken, weitgehend minimiert oder sogar gänzlich unterdrückt.

Gegenstand der Erfindung ist weiterhin die Herstellung der oberflächenmodifizierten Perlglanzpigmente sowie deren Verwendung u.a. in Lacken, Wasserlacken, Pulverlacken, Farben, Druckfarben, Sicherheitsdruckfarben, Kunststoffen, Beton, als Pigment für den Korrosionsschutz, als Dotierstoff für die Lasermarkierung von Papier und Kunststoffen und in kosmetischen Formulierungen. Weiterhin sind die erfindungsgemäßen Perlglanzpigmente auch zur Herstellung von Pigmentpräparationen sowie zur Herstellung von Trockenpräparaten geeignet.

Als Perlglanzpigmente werden vorzugsweise mit Metalloxiden beschichtete Glimmerschuppenpigmente - erhältlich z.B. von der Fa. Merck, Darmstadt unter dem Handelsnamen Iriodin^{®} verwendet. Letztere sind z.B. bekannt aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602, 32 35 017, DE 38 42 330, DE 41 37 764, EP 0 608 388, DE 196 14 637, DE 196 18 569 bekannt. Insbesondere werden als Substrat natürlicher oder synthetischer Glimmer, SiO0₂-Plättchen, Al₂O₃-Plättchen, Glasplättchen, Keramikplättchen oder synthetische trägerfreie Plättchen eingesetzt, die mit TiO₂ und/oder Fe₂O₃ beschichtet sind.

Bei den plättchenförmigen Substraten handelt es sich vorzugsweise um natürlichen oder synthetischen Glimmer, BiOCl-, Al₂O₃-, TiO₂-, SiO₂-, Fe₂O₃-, Glas- oder Graphitplättchen. Bevorzugte Effektpigmente sind mit TiO₂ (Rutil oder Anatas) beschichtete Substrate, wie z. B. mit TiO₂ beschichteter natürlicher oder synthetischer Glimmer, mit TiO₂ beschichtete SiO₂-, Al₂O₃-, Graphit-, Glas-, Fe₂O₃- oder Metallplättchen, insbesondere Aluminiumplättchen. Weiterhin bevorzugt sind Mehrschichtpigmente mit zwei, drei oder mehr Schichten, die eine oder mehrere TiO₂-Schichten enthalten.

Besonders bevorzuge Perlglanzpigmente werden nachfolgend genannt,
Substrat + TiO₂
Substrat + Fe₂O₃
Substrat + Fe₃O₄
Substrat + Cr₂O₃
Substrat + Titansuboxide
Substrat + TiO₂ + Fe₂O₃
Substrat + TiO₂ + SiO₂ + TiO₂
Substrat + TiO₂/Fe₂O₃ + SiO₂ + TiO₂
Substrat + TiO₂/Fe₂O₃ + SiO₂ + TiO₂/Fe₂O₃
Substrat + TiO₂ + SiO₂ + TiO₂/Fe₂O₃
Substrat + Fe₂O₃ + TiO₂ + SiO₂ + TiO₂
wobei es sich beim dem Substrat vorzugsweise um Glimmer, Al₂O₃-, SiO₂-, oder Metallplättchen sowie um Metall-beschichtete anorganische Plättchen handelt.

Es können auch Gemische verschiedener Perlglanzpigmente nach dem erfindungsgemäßen Verfahren stabilisiert werden.

Die erfindungsgemäßen Partikel lassen sich relativ leicht herstellen. Die Oberflächenmodifizierung der Perlglanzpigmente erfolgt durch eine vorgelagerte oder durch eine simultane Ausfällung eines geeigneten LCST- und/oder UCST-Polymeren und nachfolgende Immobilisierung.

LCST-Polymere bzw. UCST-Polymere sind Polymere, die bei niedrigen bzw. höheren Temperaturen in einem Lösemittel löslich sind und bei Erhöhung bzw. Erniedrigung der Temperatur und Erreichen der sogenannten LCST bzw. UCST (lower bzw. upper critical solution temperature) aus der Lösung als gesonderte Phase abgeschieden werden. Derartige Polymere werden z.B. in der Literatur in "Polymere", H.-G. Elias, Hüthig und Wepf-Verlag, Zug, 1996 auf den Seiten 183 ff. beschrieben.

Geeignete LCST-Polymere bzw. UCST-Polymere für die vorliegende Erfindung sind beispielsweise solche, wie sie in der WO 01/60926 A1 und WO 03/014229 A1 beschrieben werden.

Besonders geeignete LCST-Polymere sind Polyalkylenoxid-Derivate, vorzugsweise Polyethylenoxid (PEO)-Derivate, Polypropylenoxid (PPO)-Derivate, olefinisch modifizierte PPO-PEO-Block-Copolymere, mit Acrylatmodifizierte PEO-PPO-PEO-Dreiblock-Copolymere, Polymethylvinylether, Poly-N-vinylcaprolactam, Ethyl-(hydroxyethyl)-cellulose, Poly-(N-isopropylacrylamid) sowie Polysiloxane. Besonders bevorzugte LCST-Polymere sind mit olefinischen Gruppen modifizierte Siloxan-Polymere.

Geeignete UCST-Polymere sind insbesondere Polystyrol, Polystyrol-Copolymere und Polyethylenoxid-Copolymere.

Bevorzugt werden LCST- bzw. UCST-Polymere mit funktionellen Gruppen verwendet, die starke Wechselwirkungen und/oder chemische Bindungen mit dem Effektpigment und dem Anwendungsmedium, wie z. B. der Lackmatrix, eingehen. Alle dem Fachmann bekannten funktionellen Gruppen sind geeignet, insbesondere Silanol-, Amino-, Hydroxyl-, Epoxy-, Säureanhydrid- und Säuregruppen.

Die LCST- bzw. UCST-Polymere besitzen vorzugsweise Molmassen im Bereich von 300 bis 500.000 g/mol, insbesondere von 500 bis 20.000 g/mol.

Der Polymeranteil bezogen auf das Endprodukt beträgt 0,1 - 80 Gew.%, vorzugsweise 1 - 30 Gew.%, insbesondere 1 - 20 Gew.%.

Vorzugsweise wird das Perlglanzpigment mit einem immobilisierbaren LCST- und/oder UCST-Polymeren bzw. Polymergemisch, gegebenenfalls in Anwesenheit eines Lösemittels gemischt. Das LCST-Polymer wird bei der Temperatur unterhalb der LCST gelöst, während das UCST-Polymer oberhalb der UCST gelöst wird. In der Regel beträgt die LCST-Temperatur 0,5 - 90 °C, vorzugsweise 35 - 80 °C, während die UCST-Temperatur bei 5 - 90 °C, insbesondere bei 35 - 60 °C liegt. Danach erfolgt gegebenenfalls die Zugabe von Additiven. Anschließend wird die Temperatur in der Regel um ca. 5 °C über die LCST erhöht bzw. unter die UCST abgesenkt, wobei das Polymer ausfällt und sich auf der Partikeloberfläche absetzt. Zuletzt findet die Immobilisierung in Form einer Vernetzung des Polymers auf der Partikeloberfläche statt, wobei das Polymer irreversibel auf der Partikeloberfläche fixiert wird. Die Immobilisierung kann z.B. radikalisch, kationisch, anionisch oder durch eine Kondensationsreaktion stattfinden. Vorzugsweise werden die LCST- bzw. UCST-Polymere radikalisch oder durch eine Kondensationsreaktion vernetzt.

Für eine radikalische Vernetzung (Immobilisierung) der abgeschiedenen Schicht in Wasser wird vorzugsweise Kaliumperoxodisulfat oder Ammoniumperoxodisulfat in Konzentrationsbereichen von 1 - 100 Gew.% bezogen auf das zur Belegung verwendete olefinische LCST- bzw. UCST-Polymer eingesetzt. Die Vernetzung erfolgt in Abhängigkeit von der LCST- bzw. UCST-Temperatur des Polymeren bei 0 - 35 °C unter Verwendung eines Katalysators, wie z. B. eines Fe(II)-Salzes, oder bei 40 - 100 °C durch direkten thermischen Zerfall des radikalischen Initiators.

Sofern bei dem erfindungsgemäßen Verfahren ein Lösemittel benötigt wird, richtet sich die Wahl des Lösemittels nach der Löslichkeit des verwendeten Polymers. Vorzugsweise ist das Lösemittel Wasser oder ein mit Wasser mischbares organisches Lösemittel. Zu den mit Wasser mischbaren Lösemitteln zählen auch solche Lösemittel, die Mischungslücken mit Wasser aufweisen. In diesen Fällen werden die Mengenverhältnisse so gewählt, dass Mischbarkeit vorliegt. Beispiele für geeignete Lösemittel sind Mono- und Polyalkohole wie z.B. Methanol, Ethanol, n-Propanol, Isopropanol, Cyclohexanol, Glykol, Glycerin, Propylenglykol, Polyethylenglykol, Polybutylenglykol sowie die Mono- und Diether mit Methanol, Ethanol, Propanol und Butanol der Polyalkylen-glykole; Ether wie z.B. Tetrahydrofuran, Dioxan, 1,2-Propandiolpropyl-ether, 1,2-Butan-1-methylether, Ethylenglykolmonomethylether, Diethylenglykolmonomethylether; Ester wie z.B. Essigsäuremethylester, Monoester von Ethylenglykol oder Propylenglykolen mit Essigsäure, Butyrolacton; Ketone wie Aceton oder Methylethylketon; Amide wie Formamid, Dimethylformamid, Dimethylacetamid, N-Methylpyrrolidon und Hexamethylphosphorsäuretriamid; Sulfoxide und Sulfone wie Dimethylsulfoxid und Sulfolan; Alkancarbonsäure wie Ameisensäure oder Essigsäure.

Vorzugsweise werden die LCST- und/oder UCST-Polymerbeschichtungen als vollständige Umhüllung der Partikel vorgenommen. Besonders bevorzugt sind Perlglanzpigmente, die eine LCST-Polymerumhüllung, insbesondere aus Polysiloxanen, oder alternierend eine LCST- und eine UCST-Polymerumhüllung aufweisen. Die Perlglanzpigmente können auch mit zwei oder mehr aufeinanderfolgenden jeweils gleichen oder verschiedenen LCST- bzw. UCST-Polymeren umhüllt werden. Vorzugsweise enthalten die Effektpigmente nicht mehr als fünf Polymerumhüllungen.

Die Polymerschichtdicke bestimmt u.a. das Absetzverhalten, das sogenannte Seeding, der Effektpigmente. Das Seeding kann unterdrückt werden, indem die Polymerumhüllung entsprechend dick gewählt wird, so dass die Dichte der Pigmente beeinflusst wird. Die Partikel setzen sich langsamer ab und verdichten sich zumeist nicht so stark wie unbehandelte Effektpigmente, so dass sie leicht wieder aufgerührt werden können. Durch die Polymerumhüllung wird ebenfalls auch das Ausbluten der Pigmente im Anwendungsmedium weitgehend unterbunden.

Als besonders bevorzugt haben sich Polymerschichten von 2 - 500 nm, vorzugsweise 10 - 200 nm und insbesondere 20 - 80 nm erwiesen.

Die einzelnen LCST- und/oder UCST-Polymerschichten können auch Additive enthalten, die die chemische und/oder mechanische Stabilität der Perlglanzpigmente zusätzlich erhöhen oder erniedrigen.

Geeignete Additive sind z.B. Nanopartikel, wie z. B. Bariumsulfat, polymerisierbare Monomere, Weichmacher, Antioxidantien, Rußpartikel, Mikrotitan oder deren Gemische.

Der Anteil an Additiven beträgt vorzugsweise 0,001 bis 150 Gew.%, insbesondere 0,05 bis 100 Gew.%, bezogen auf das eingesetzte Polymer.

Die Additive werden der Lösung des LCST- bzw. UCST-Polymeren vorzugsweise als Dispersion zugemischt, wobei bevorzugt dasselbe Lösemittel wie das der Polymerlösung zum Einsatz kommt und die Temperatur der Dispersion unter die LCST bzw. UCST abgesenkt wird. Es kann jedoch auch eine direkte Dispergierung der Additive in der LCST- bzw. UCST-Lösung erfolgen.

Durch die Oberflächenmodifizierung der Perlglanzpigmente mit einem LCST- und/oder UCST-Polymer ändern sich die physikalischen Parameter der Pigmente, wie z.B. der Brechungsindex. Weiterhin kann auch die Hydrophilie bzw. Hydrophobie und damit auch die Oberflächenspannung und die Grenzflächenspannung der Perlglanzpigmente in unterschiedlichen Anwendungsmedien durch eine geeignete Polymerbelegung gezielt eingestellt werden. Daraus resultiert eine verbesserte und schnellere Benetzung und verbesserte Verträglichkeit der Perlglanzpigmente mit den jeweiligen Systemen. Da die LCST- und/oder UCST-Polymerschicht ferner auch mechanische Belastungen aufnehmen kann, sind die nachbehandelten Perlglanzpigmente auch gegenüber Scherbelastungen stabiler. Dies ist insbesondere bei entsprechenden Anwendungen von scherempfindlichen Perlglanzpigmenten auf Glimmerbasis, von Vorteil.

Bei stark vernetzten LCST- und UCST-Polymerbeschichtungen wird weiterhin das Bleeding und Blooming der Perlglanzpigmente im Anwendungssystem stark zurückgedrängt.

Durch den Einschluss von Fremdstoffen, wie z.B. Nanopartikeln, Weichmachern und polymerisierbaren Monomeren, können die Eigenschaften der Polymerschicht wie Härte und Vernetzungsgrad (Reversibilität) der Schicht zusätzlich beeinflusst werden. So ist es möglich, z.B. Titandioxid-Nanopartikel mit vernetzbarem LCST-Polymer und weiteren Monomeren als Mischung durch Ausfällung abzuscheiden, wobei die Härte, Vernetzungsdichte und Hydrophilie/-Hydrophobie je nach Polymer-Mischung variiert werden kann. Diese Mischung wird dann an der Oberfläche vernetzt, wobei je nach Vernetzungsreaktion und Menge an Vernetzer zusätzlich die Eigenschaften der abgeschiedenen Polymerschicht beeinflussbar sind.

Werden mit Acrylatgruppen modifizierte LCST-Polymere mit z.B. Kaliumperoxodisulfat auf der Oberfläche vernetzt, so wird nicht nur durch die Polymerumhüllung, sondern auch durch die Menge an eingesetztem Peroxodisulfat die Hydrophilie des Effektpigments stark erhöht.

Vorzugsweise besitzen die erfindungsgemäßen Perlglanzpigmente unter Anwendung der ESA-Methode (Electroacoustic Spectral Analysis) einen isoelektrischen Punkt (pH-Wert bei dem das Zetapotential des Pigments Null wird) im Bereich von 5 bis 10, insbesondere von 6 bis 8.

Die oberflächenmodifizierten Perlglanzpigmente zeigen weiterhin eine sehr gute Wetterbeständigkeit, ein sehr gutes Dispergierverhalten und sind aufgrund ihrer Stabilität sehr gut für die verschiedensten Anwendungssysteme geeignet, insbesondere für wässrige und organische Lacke, besonders bevorzugt für Pulverlacke.

Perlglanzpigmente auf Basis plättchenförmiger Substrate sind in der Regel scherempfindlich. Die Oberflächenmodifizierung der Perlglanzpigmente mit LCST- und/oder UCST-Polymeren führt zu einer zusätzlichen mechanischen Stabilisierung der Pigmente bei hohen Scherbelastungen oder abrasiven Verarbeitungsverfahren. Die Stabilisierung kann zusätzlich erhöht werden, wenn man den LCST- und/oder UCST-Polymeren noch Nanopartikel zumischt. Derartig stabilisierte Perlglanzpigmente können gegenüber den unbehandelten Perlglanzpigmenten deutlich höheren Scherkräften ausgesetzt werden, ohne Verlust der Plättchenstruktur.

Die erfindungsgemäßen Perlglanzpigmente zeigen im Lack eine verbesserte Orientierung und stark verbesserte Farbwerte im Vergleich zu Perlglanzpigmenten, die zur Verbesserung des Leafing-Verhaltens mit einem Silan behandelt worden sind (EP 0 634 459 A2).

Die erfindungsgemäß modifizierten Perlglanzpigmente sind mit einer Vielzahl von Farbsystemen kompatibel, vorzugsweise aus dem Bereich der Lacke, Wasserlacke, Pulverlacke, Farben, Druckfarben, Sicherheitsdruckfarben, Kunststoffe sowie der kosmetischen Formulierungen. Weiterhin sind die erfindungsgemäßen Partikel, sofern sie durch die Polymernachbehandlung entsprechend funktionalisiert wurden, als funktionale Pigmente unter anderem für die Lasermarkierung von Papieren und Kunststoffen, als Lichtschutz, als Pigment für den Korrosionsschutz, zum Einfärben von Beton sowie für Anwendungen im Agrarbereich, z.B. für Gewächshausfolien, sowie z.B. für die Farbgebung von Zeltplanen geeignet.

Es versteht sich von selbst, dass für die verschiedenen Anwendungszwecke die erfindungsgemäßen Partikel auch vorteilhaft in Abmischung mit organischen Farbstoffen, organischen Pigmenten oder anderen Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid crystal polymers), und herkömmlichen transparenten, bunten und schwarzen Glanzpigmenten auf der Basis von metalloxidbeschichteten Glimmer-, Glas-, Al₂O₃-, Graphit- und SiO₂-Plättchen, etc. verwendet werden können. Die erfindungsgemäß stabilisierten Partikel können in jedem Verhältnis mit handelsüblichen Pigmenten und Füllstoffen gemischt werden.

Die oberflächenmodifizierten Perlglanzpigmente sind weiterhin geeignet zur Herstellung von fließfähigen Pigmentpräparationen und Trockenpräparaten, wie z.B. Granulate, Chips, Briketts, Würstchen, Pellets, etc. Die Pigmentpräparationen und Trockenpräparate zeichnen sich dadurch aus, dass sie mindestens ein oder mehrere erfindungsgemäße Perlglanzpigmente, Bindemittel und optional ein oder mehrere Additive enthalten. Die Trockenpräparate müssen dabei nicht vollständig getrocknet sein, sondern können bis zu max. 8 Gew.%, vorzugsweise 3-6 Gew.%, an Wasser und/oder eines Lösemittels oder Lösemittelgemisches enthalten.

Gegenstand der Erfindung sind somit auch Formulierungen, die die erfindungsgemäßen Pigmentpräparationen und Trockenpräparate enthalten.

Die folgenden Beispiele sollen die Erfindung näher erläutern, ohne sie jedoch zu begrenzen.

### Beispiele

### Beispiel 1

Es werden 5 g eines mit olefinischen Gruppen modifizierten Siloxan-LCST-Polymers in 300 g Wasser bei 5 °C gelöst, 100 g Iriodin^{®} 504 (mit Eisen(III)oxid beschichtetes Glimmerpigment der Fa. Merck KGaA) eindispergiert und für 0,5 h bei 500 U/min zur Benetzung des Pigments gerührt. Danach wird auf die LCST des Polymeren von 8 °C erwärmt, 20 min die Temperatur gehalten, auf 20 °C erwärmt und die ausgefällte Polymerschicht für die Dauer von 2 h radikalisch durch einen hydrophilen, wasserlöslichen Vernetzer (Kaliumperoxodisulfat) die Polymerschicht immobilisiert. Es wird abfiltriert und mit Wasser gewaschen.

Wird dieses oberflächenmodifizierte Effektpigment in einen konventionellen Acryllack eingearbeitet, so zeigt es gegenüber einem unbehandelten Iriodin^{®} 504-Pigment einen um 8 % erhöhten DOI-Wert und gegenüber einem mit einem Silan behandelten Iriodin^{®} 504-Pigment einen um 5 % erhöhten DOI-Wert (Distinctness of Image, Dorigon, Hunter Lab).

Der DOI-Wert ist ein Maß für die Brillanz und Abbildungsschärfe einer Lackschicht, wobei ein höherer DOI-Wert für eine verbesserte Brillanz und Abbildungsschärfe charakteristisch ist.

### Beispiel 2

In 600 ml Wasser werden 2,4 g eines mit olefinischen Gruppen und Aminogruppen modifizierten LCST-Polymeren auf Polyetherbasis bei 20 °C gelöst und 200 g Iriodin^{®} 504 zugegeben. Es wird 0,5 h bei 20 °C gerührt und danach auf die LCST-Temperatur von 62 °C erwärmt. Nach 0,5 h Rühren bei 62 °C werden 5 g eines hydrophilen wasserlöslichen Vernetzers (Kaliumperoxodisulfat) zugesetzt, die Temperatur auf 72 °C erhöht und für die Dauer von 2 h bei 72 °C gehalten. Das modifizierte Pigment wird abfiltriert und mit Wasser gewaschen.

Bei dem oberflächenmodifizierten Effektpigment wird unter Anwendung der ESA-Methode (Electroacoustic Spectral Analysis) ein isoelektrischer Punkt (pH-Wert bei dem das Zetapotential des Pigments Null wird) von 5,4 bestimmt.

Wird das behandelte Perlglanzpigment nur mit 1 g des hydrophilen wasserlöslichen radikalischen Vernetzers unter gleichen Bedingungen vernetzt, so resultiert ein isoelektrischer Punkt des Pigments von 7,8. Wird das belegte Perlglanzpigment nicht vernetzt, so wird ein isoelektrischer Punkt von 8,7 erhalten.

Diese Unterschiede im isoelektrischen Punkt resultieren unter anderem aufgrund der unterschiedlich stark ausgeprägten Addition von Hydroxyradikalen an die olefinische Doppelbindung. Die mit unterschiedlichen Mengen Vernetzer immobilisierten Nachbehandlungen weisen demgemäss eine unterschiedliche Dichte von Hydroxylgruppen auf, was zu einem stark veränderten Ladungsverhalten und auch einer veränderten Hydrophilie des nachbehandelten Effektpigments führt.

### Beispiel 3

Es werden 1,5 g eines mit olefinischen Gruppen modifizierten UCST-Polymeren auf Polystyrolbasis in 60 g Cyclohexanol bei 85 °C gelöst, 10 g Aluminiumplättchen (Fa. Eckart) zugegeben und für 0,5 h bei 500 U/min zur Benetzung des Pigments gerührt. Danach wird auf die UCST des Polymeren von 65 °C abgekühlt, 20 min die Temperatur gehalten und die ausgefällte Polymerschicht für die Dauer von 2 h radikalisch durch einen hydrophoben Vernetzer (Azoisobutyronitril) die Polymerschicht bei 65 °C immobilisiert. Es wird abfiltriert und mit Aceton gewaschen.

Wird dieses oberflächenmodifizierte Metalleffektpigment in einen konventionellen Acryllack eingearbeitet, so zeigt es gegenüber dem unbehandelten Pigment einen um 5 % erhöhten DOI-Wert. Das nachbeschichtete Aluminiumpigment zeigt sich ferner gasungsstabil in wässriger Lösung im pH-Bereich von 3 - 9.

### Beispiel 4

Es werden 15 g eines mit olefinischen Gruppen modifizierten Polyethylenglykol-Polypropylenglykol-Blockcoppolymeren mit 3 g Bariumsulfat-Nanoteilchen für die Dauer von einer Stunde unter Verwendung von Dispergierperlen im Scandex dispergiert. Diese Mischung wird bei Raumtemperatur in 200 g Wasser gegeben, 200 g BiOCl-Paste (50%ig in Wasser, Fa. Merck KGaA) eingerührt und auf die LCST-Temperatur von 55 °C erwärmt. Nach 0,5 h Rühren wird auf 65 °C erwärmt, 3 g Kaliumperoxodisulfat zugegeben und für die Dauer von 2 h vernetzt. Die beschichteten BiOCl-Pigmente werden abzentrifugiert und mit Wasser gespült.

Das Produkt wird mit Wasser verdünnt, so dass der Festkörpergehalt ca. 50 % beträgt. Nach 1 h Scherung am Dispermat bei 3000 U/min und unter Verwendung einer 5 cm Zahnscheibe wird die Teilchengröße gemessen und mit analog belasteten unbeschichteten BiOCI-Pigmenten verglichen. Die Teilchengröße der unbeschichteten BiOCI-Pigmente ist um ca. 22 % niedriger als bei den oberflächenmodifizierten BiOCI-Pigmenten.

## Patentansprüche

1. Oberflächenmodifizierte Perlglanzpigmente auf der Basis von natürlichem oder synthetischem Glimmer, Al₂O₃-, TiO₂-, SiO₂-, Fe₂O₃-, Glas-, Keramik- oder Graphitplättchen, **dadurch gekennzeichnet, dass** sie mit einer oder mehreren Schichten aus immobilisierten LCST- und/oder UCST-Polymeren umhüllt sind,

2. Oberflächenmodifizierte Perlglanzpigmente nach Anspruch 1, **dadurch gekennzeichnet, dass** die Polymerumhüllung Schichtdicken von 2 - 500 nm aufweist.

3. Oberflächenmodifizierte Perlglanzpigmente nach Anspruch 1 oder 2, **dadurch gekennzeichnet, dass** die LCST-Polymeren ausgewählt sind aus der Gruppe der Polyalkylenoxid-Derivate, olefinisch modifizierten PEO-PPO-Copolymeren, Polymethylvinylether, Poly-N-vinylcaprolactame, Ethyl-(hydroxyethyl)-cellulosen, Poly-(N-isopropylacrylamide) und Polysiloxanen sowie deren Gemische.

4. Oberflächenmodifizierte Perlglanzpigmente nach Anspruch 1 oder 2, **dadurch gekennzeichnet, dass** die UCST-Polymeren ausgewählt sind aus der Gruppe der Polystyrole, Polystyrol-Copolymere und Polyethylenoxid-Copolymeren, oder deren Gemische.

5. Oberflächenmodifizierte Perlglanzpigmente nach einem oder mehreren der Ansprüche 1 bis 3, **dadurch gekennzeichnet, dass** das LCST-Polymer ein mit olefinischen Gruppen modifiziertes Polysiloxan ist.

6. Oberflächenmodifzierte Perlglanzpigmente nach einem oder mehreren der Ansprüche 1 bis 5, **dadurch gekennzeichnet, dass** die Polymerumhüllung zusätzlich Nanopartikel, polymerisierbare Monomere, Weichmacher, Antioxidantien, Rußpartikel, Mikrotitan oder deren Gemische enthält.

7. Oberflächenmodifizierte Perlglanzpigmente nach einem oder mehreren der Ansprüche 1 bis 6, **dadurch gekennzeichnet, dass** die Polymerumhüllung 0,001 bis 150 Gew. % an Additiven bezogen auf das eingesetzte Polymer enthält.

8. Oberflächenmodifizierte Perlglanzpigmente nach einem oder mehreren der Ansprüche 1 bis 7, **dadurch gekennzeichnet, dass** die Perlglanzpigmente ausgewählt sind aus der nachfolgende Gruppe:
Substrat + TiO₂
Substrat + Fe₂O₃
Substrat + Fe₃O₄
Substrat + Cr₂O₃
Substrat + Titansuboxide
Substrat + TiO₂ + Fe₂O₃
Substrat + TiO₂ + SiO₂ + TiO₂
Substrat + TiO₂/Fe₂O₃ + SiO₂ + TiO₂
Substrat + TiO₂/Fe₂O₃ + SiO₂ + TiO₂/Fe₂O₃
Substrat + TiO₂ + SiO₂ + TiO₂/Fe₂O₃
Substrat + Fe₂O₃ + TiO₂ + SiO₂ + TiO₂

9. Oberflächenmodifizierte Perlglanzpigmente nach einem oder mehreren der Ansprüche 1 bis 8, **dadurch gekennzeichnet, dass** die Perlglanzpigmente auf natürlichem oder synthetischem Glimmer, SiO₂-Plättchen, Al₂O₃-Plättchen, Glasplättchen, Keramikplättchen oder synthetische trägerfreie Plättchen basieren, und mit TiO₂ und/oder Fe₂O₃ beschichtet sind.

10. Verfahren zur Herstellung von oberflächenmodifizierten Perlglanzpigmente nach einem oder mehreren der Ansprüche 1 bis 9, **dadurch gekennzeichnet, dass** das LCST- und/oder UCST-Polymer durch Ausfällung in Wasser und/oder einem organischen Lösemittel auf die Pigmentoberfläche aufgebracht und und irreversibel immobilisiert wird,

11. Verfahren nach Anspruch 10, **dadurch gekennzeichnet, dass** übliche Additive dem Polymer zugesetzt werden.

12. Verwendung der oberflächenmodifizierte Perlglanzpigmente nach einem oder mehreren der Ansprüche 1 bis 9 in Lacken, Wasserlacken, Pulverlacken, Farben, Druckfarben, Sicherheitsdruckfarben, Kunststoffen, Beton, in kosmetischen Formulierungen, in Agrarfolien und Zeltplanen, zur Lasermarkierung von Papieren und Kunststoffen, als Lichtschutz, als Pigment für den Korrosionsschutz sowie zur Herstellung von Pigmentpräparationen und Trockenpräparaten.

13. Formulierungen enthaltend die oberflächenmodifizierten Perlglanzpigmente nach einem oder mehreren der Ansprüche 1 bis 9.

## Claims

1. Surface-modified pearlescent pigments based on natural or synthetic mica, Al₂O₃ flakes, TiO₂ flakes, SiO₂ flakes, Fe₂O₃ flakes, glass flakes, ceramic flakes or graphite flakes, **characterised in that** they are coated with one or more layers of immobilised LCST and/or UCST polymers.

2. Surface-modified pearlescent pigments according to Claim 1, **characterised in that** the polymer coating has layer thicknesses of 2 - 500 nm.

3. Surface-modified pearlescent pigments according to Claim 1 or 2, **characterised in that** the LCST polymers are selected from the group of the polyalkylene oxide derivatives, olefinically modified PEO-PPO copolymers, polymethyl vinyl ether, poly-N-vinylcaprolactams, ethyl-(hydroxyethyl)celluloses, poly(N-isopropylacrylamides) and polysiloxanes, and mixtures thereof.

4. Surface-modified pearlescent pigments according to Claim 1 or 2, **characterised in that** the UCST polymers are selected from the group of the polystyrenes, polystyrene copolymers and polyethylene oxide copolymers, or mixtures thereof.

5. Surface-modified pearlescent pigments according to one or more of Claims 1 to 3, **characterised in that** the LCST polymer is a polysiloxane modified with olefinic groups.

6. Surface-modified pearlescent pigments according to one or more of Claims 1 to 5, **characterised in that** the polymer coating additionally comprises nanoparticles, polymerisable monomers, plasticisers, antioxidants, carbon-black particles, microtitanium or mixtures thereof.

7. Surface-modified pearlescent pigments according to one or more of Claims 1 to 6, **characterised in that** the polymer coating comprises 0.001 to 150% by weight of additives, based on the polymer employed.

8. Surface-modified pearlescent pigments according to one or more of Claims 1 to 7, **characterised in that** the pearlescent pigments are selected from the following group:
substrate + TiO₂
substrate + Fe₂O₃
substrate + Fe₃O₄
substrate + Cr₂O₃
substrate + titanium suboxides
substrate + TiO₂ + Fe₂O₃
substrate + TiO₂ + SiO₂ + TiO₂
substrate + TiO₂/Fe₂O₃ + SiO₂ + TiO₂
substrate + TiO₂/Fe₂O₃ + SiO₂ + TiO₂/Fe₂O₃
substrate + TiO₂ + SiO₂ + TiO₂/Fe₂O₃
substrate + Fe₂O₃ + TiO₂ + SiO₂ + TiO₂

9. Surface-modified pearlescent pigments according to one or more of Claims 1 to 8, **characterised in that** the pearlescent pigments are based on natural or synthetic mica, SiO₂ flakes, Al₂O₃ flakes, glass flakes, ceramic flakes or synthetic support-free flakes, and are coated with TiO₂ and/or Fe₂O₃.

10. Process for the preparation of surface-modified pearlescent pigments according to one or more of Claims 1 to 9, **characterised in that** the LCST and/or UCST polymer is applied to the pigment surface by precipitation in water and/or an organic solvent and irreversibly immobilised.

11. Process according to Claim 10, **characterised in that** conventional additives are added to the polymer.

12. Use of the surface-modified pearlescent pigments according to one or more of Claims 1 to 9 in varnishes, water-borne coatings, powder coatings, paints, printing inks, security printing inks, plastics, concrete, in cosmetic formulations, in agricultural sheeting and tarpaulins, for the laser marking of papers and plastics, as light protection, as pigment for corrosion protection and for the preparation of pigment compositions and dry preparations.

13. Formulations comprising the surface-modified pearlescent pigments according to one or more of Claims 1 to 9.

## Revendications

1. Pigments nacrés modifiés en surface basés sur du mica naturel ou synthétique, des flocons d'Al₂O₃, des flocons de TiO₂, des flocons de SiO₂, des flocons de Fe₂O₃, des flocons de verre, des flocons de céramique ou des flocons de graphite, **caractérisés en ce qu'**ils sont gainés par une ou plusieurs couche(s) de polymères LCST et/ou UCST immobilisés.

2. Pigments nacrés modifiés en surface selon la revendication 1, **caractérisés en ce que** la gaine de polymères présente des épaisseurs de couche de 2 - 500 nm.

3. Pigments nacrés modifiés en surface selon la revendication 1 ou 2, **caractérisés en ce que** les polymères LCST sont choisis parmi le groupe constitué par les dérivés d'oxyde de polyalkylène, les copolymères PEO-PPO modifies oléfiniquement, le polyméthylvinyléther, les poly-N-vinylcaprolactames, les éthyl(hydroxyéthyl)celluloses, les poly(N-isopropylacrylamides) et les polysiloxanes, et des mélanges afférents.

4. Pigments nacrés modifiés en surface selon la revendication 1 ou 2, **caractérisés en ce que** les polymères UCST sont choisis parmi le groupe constitué par les polystyrènes, les copolymères de polystyrènes et les copolymères d'oxyde de polyéthylène, ou des mélanges afférents.

5. Pigments nacrés modifiés en surface selon une ou plusieurs des revendications 1 à 3, **caractérisés en ce que** le polymère LCST est un polysiloxane modifié à l'aide de groupes oléfiniques.

6. Pigments nacrés modifiés en surface selon une ou plusieurs des revendications 1 à 5, **caractérisés en ce que** la gaine de polymères comprend de façon additionnelle des nanoparticules, des monomères polymérisables, des plastifiants, des antioxydants, des particules de noir de charbon, du microtitane ou des mélanges afférents.

7. Pigments nacrés modifiés en surface selon une ou plusieurs des revendications 1 à 6, **caractérisés en ce que** la gaine de polymères comprend de 0,001 à 150% en poids d'additifs, sur la base du polymère utilisé.

8. Pigments nacrés modifiés en surface selon une ou plusieurs des revendications 1 à 7, **caractérisés en ce que** les pigments nacrés sont choisis parmi le groupe qui suit :
substrat + TiO₂
substrat + Fe₂O₃
substrat + Fe₃O₄
substrat + Cr₂O₃
substrat + sous-oxydes de titane
substrat + TiO₂ + Fe₂O₃
substrat + TiO₂ + SiO₂ + TiO₂
substrat + TiO₂/Fe₂O₃ + SiO₂ + TiO₂
substrat + TiO₂/Fe₂O₃ + SiO₂ + TiO₂/Fe₂O₃
substrat + TiO₂ + SiO₂ + TiO₂/Fe₂O₃
substrat + Fe₂O₃ + TiO₂ + SiO₂ + TiO₂.

9. Pigments nacrés modifiés en surface selon une ou plusieurs des revendications 1 à 8, **caractérisés en ce que** les pigments nacrés sont basés sur du mica naturel ou synthétique, des flocons de SiO₂, des flocons d'Al₂O₃, des flocons de verre, des flocons de céramique ou des flocons sans supports synthétiques, et sont revêtus de TiO₂ et/ou de Fe₂O₃.

10. Procédé pour la préparation de pigments nacrés modifiés en surface selon une ou plusieurs des revendications 1 à 9, **caractérisé en ce que** le polymère LCST et/ou UCST est appliqué sur la surface des pigments par précipitation dans de l'eau et/ou un solvant organique et est immobilisé de façon irréversible.

11. Procédé selon la revendication 10, **caractérisé en ce que** des additifs classiques sont ajoutés au polymère.

12. Utilisation des pigments nacrés modifiés en surface selon une ou plusieurs des revendications 1 à 9 dans des vernis, des revêtements aqueux, des revêtements pulvérulents, des peintures, des encres d'impression, des encres d'impression de sécurité, des matières plastiques, du ciment, dans des formulations cosmétiques, au niveau du recouvrement et du bâchage en agriculture, pour le marquage laser de papiers et de matières plastiques, en tant que protection vis-à-vis de la lumière, en tant que pigment pour la protection vis-à-vis de la corrosion et pour la préparation de compositions de pigments et de préparations sèches.

13. Formulations comprenant les pigments nacrés modifiés en surface selon une ou plusieurs des revendications 1 à 9.
